# NEUE EUROPÄISCHE PATENTSCHRIFT

(11) **EP 0 333 922 B2**
(45) Veröffentlichungstag und Bekanntmachung des Hinweises auf die Entscheidung über den Einspruch: **28.08.1996**
(45) Hinweis auf die Patenterteilung: 05.08.1992
(21) Anmeldenummer: 88119944.2
(22) Anmeldetag: 30.11.1988
(51) Int. Cl.: H04Q 3/68, H04Q 3/52

(54) **Dreistufiges blockierungsfreies Koppelfeld**
Blocking-free three-stage switching network
Réseau de commutation à trois étages sans blocage

(30) Priorität: 29.01.1988 DE 3802579
(43) Veröffentlichungstag der Anmeldung: 27.09.1989
(73) Patentinhaber: ANT Nachrichtentechnik GmbH, D-71522 Backnang (DE)
(72) Erfinder: Brünle, Siegfried, Dipl.-Ing., D-7150 Backnang (DE); Eberspächer, Klaus, Dipl.-Ing., D-7151 Weissach 1 (DE)

(56) Entgegenhaltungen:
- EP-A- 0 240 580
- PATENT ABSTRACTS OF JAPAN, Band 11, Nr. 122 (E-500)[2569], 16. April 1987 & JP-A-61 269 493
- COMPUTER, Band 20, Nr. 6, Juni 1987, Seiten 30-40, IEEE, New York, NY, US; V.P. KUMAR et al.: "Augmented shuffle-exchange multistage interconnection networks"
- IEEE International Conference on Circuits and Computers ICCC 80, Seiten 750-753, University of New Brunswick, Fredericton, NB, Canada; J.J. Narraway and K.-M. So
- International Switching Symposium ISS 1972, Seiten 188-191; Stromberg-Carlson, Rochester, New York, US, 6-9 June 1972; A.A. Jorgensen.

## Beschreibung

Die Erfindung betrifft ein Koppelfeld ausgehend vom Oberbegriff des Patentanspruchs 1. Solche Koppelfelder sind bekannt (Bell System Technical Journal, Vol. XXXII, 1953, Seiten 406-425; US PS 3,987,291).

Aus obigen Veröffentlichungen ist es bekannt, ein Koppelfeld dreistufig aus Teilkoppelfeldern aufzubauen. Unter Einhaltung bestimmter Bedingungen ist es möglich, bei einem dreistufigen Aufbau die Zahl der Koppelpunkte und Beibehaltung der Blockierungsfreiheit kleiner zu halten als N², wobei N die Zahl der zu verbindenden Eingänge und Ausgänge bedeutet.

Blockierungsfreiheit kann prinzipiell auch erreicht werden, indem man ein an sich nicht blockierungsfreies Koppelfeldetwa durch Verdoppelung der Koppelpunktzahl - erweitert. Dies bedeutet allerdings einen erheblichen Mehraufwand.

Aus "Fault Diagnosis in Inter-Progressor Switching Networks" (Beitrag aus IEEE International Conference on Circuits and Computers ICCC 80, Seiten 750 bis 753, J.J. Narraway and K-M.So, University of New Brunswick, Fredericton, NB, Canada) ist im Zusammenhang mit der Fehlerdiagnose in Koppelfeldern ein dreistufiges Koppelfeld bekannt, das nach der Clos`schen Bedingung blockierungsfrei gestaltet ist. Dieses Koppelfeld setzt sich aus einer Eingangs-, einer Zwischen- und einer Ausgangsstufe zusammen, die jeweils aus mehreren Teilkoppelfeldern bestehen. Die Zwischenstufe des Koppelfeldes enthält, gemäß der Clos`schen Bedingung, w ≥ 2p -1 Teilkoppelfelder (p = Zahl der Eingänge jedes Teilkoppelfeldes der Eingangsstufe). Hinweise, wie eine Clos`sche Koppelfeldanordnung ausgestaltet sein müßte, um Blockierungsfreiheit auch bei Ausfall eines beliebigen Teilkoppelfeldes zu gewährleisten, gibt dieses Dokument nicht .

Die Druckschrift "The ESC-1-Electronic Switching System with distributed control" (Beitrag aus ISS (International Switching Symposium) 1972, Seiten 188 bis 191, Adam A. Jorgensen, Stromberg-Carlson, Rochester, New York) offenbart ein dreistufiges Koppelfeld, welches nicht als blockierungsfreies Clos Koppelfeld sondern als "fan-type network" ausgebildet ist. Bei diesem Koppelfeld wird lediglich die Zahl der Eingänge der Teilkoppelfelder der Eingangsstufe in bezug auf die Koppelfeldeingänge verdoppelt; dies wird dadurch erreicht, daß in der Eingangsstufe neben den eigentlichen Teilkoppelfeldern zusätzlich sog. transponierte Teilkoppelfelder vorgesehen sind, d.h. die Zahl der Teilkoppelfelder wird verdoppelt.

Aufgabe der Erfindung ist es, das Koppelfeld ausgehend vom Oberbgriff des Patentsanspruchs 1 so auszugestalten, daß eine Blockierungsfreiheit auch bei Ausfall eines beliebigen Teilkoppelfeldes gewährleistet ist.

Diese Aufgabe wird durch die Merkmale des Patentanspruchs 1 gelöst. In den Unteransprüchen sind vorteilhafte Ausgestaltungen aufgezeigt.

Die Realisierung gemäß den Merkmalen der Patentansprüche besitzt folgende Vorteile:
Bei Ausfall eines Teilkoppelfeldes erfolgt die Durchschaltung über die redundanten Ein- bzw. Ausgänge anderer Teilkoppelfelder, so daß keine Verbindungen verloren gehen und eine Blockierungsfreiheit in jedem Falle gewährleistet ist. Bei Verwendung von symmetrischen Modulen für die Teilkoppelfelder lassen sich blockierungsfrei redundante Wege durch ein Clos-Koppelfeld schalten. Bei Reparaturen oder Störungen läßt sich ein Teilkoppelfeld pro Stufe austauschen, ohne daß eine Koppelfeldblockierung auftritt. Das Koppelfeld nach der Erfindung läßt sich bei Bedarf sogar während des Betriebs störungsfrei erweitern. Wenn in der Eingangs- oder Ausgangsstufe mehrere Teilkoppelfelder gemeinsam auf einer Leiterplatte untergebracht sind, kann auch bei Einhaltung gewisser Verdrahtungsbedingungen der Teilkoppelfelder der Ausfall einer ganzen Leiterplatte hingenommen werden, ohne Verlust der Blockierungsfreiheit.

Anhand der Zeichnungen werden Ausführungsbeispiele der Erfindung näher erläutert.

Es zeigen
- Figur 1: ein Prinzipschaltbild für ein bekanntes Clos-Koppelfeldes,
- Figur 2: ein Prinzipschaltbild für ein redundantes Clos-Koppelfeld,
- Figur 3: ein Beispiel für eine Blockierung bei gemeinsamer Führung von redundanten Leitungen auf ein Teilkoppelfeld,
- Figur 4: ein Schema zum Beweis der Blokkierungsfreiheit,
- Figur 5: ein Koppelfeld nach der Erfindung mit 8 Ein- bzw. Ausgängen,
- Figur 6: ein Koppelfeld nach der Erfindung mit 128 Ein- bzw. Ausgängen,
- Figur 7: die zyklische Vernetzung der redundanten Leitungen bei Unterbringung mehrerer Teilkoppelfelder auf jeweils einer Leiterplatte,
- Figur 8: die modulare Erweiterung eines Koppelfeldes nach der Erfindung,
- Figur 9: die Parallelschaltung von Koppelfeldern.

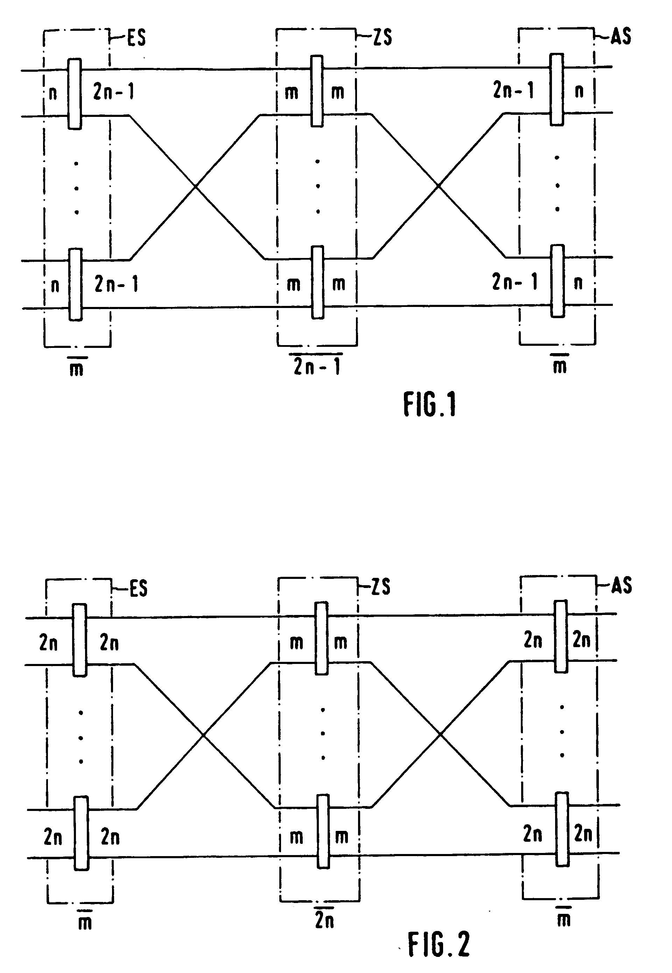

Zum einfacheren Verständnis der Erfindung ist in Figur 1 die Struktur eines bekannten Clos-Koppelfeldes dargestellt. Es ist dreistufig aufgebaut Die Eingangsstufe ES besteht aus m Teilkoppelfeldern, die jeweils n Eingänge und 2n-1 Ausgänge aufweisen. Die Zwischenstufe ZS besteht aus 2n-1 Teilkoppelfeldern mit jeweils m Eingängen und m Ausgängen. Die Ausgangsstufe AS weist m Teilkoppelfelder auf mit jeweils 2n-1 Eingängen und n Ausgängen. Die Clos-Struktur nach Figur 1 ist blockierungsfrei. Blockierungsfreiheit bedeutet, daß zwischen einem beliebigen Eingang und einem beliebigen Ausgang in jedem Fall eine Verbindung aufgebaut werden kann. Das Clos-Koppelfeld nach Figur 1 besitzt den Nachteil, daß bei der Verwendung von Teilkoppelfeldern mit quadratischen Matrizen die Grundbausteine in der Eingangs-und Ausgangsstufe nicht optimal ausgenutzt werden. Mit Hilfe dieser beim Clos-Koppelfeld nicht benötigten Eingänge lassen sich Clos-Koppelfelder mit Redundanz aufbauen. Redundanz bedeutet hier, daß für eine Verbindung eines Einganges mit einem Ausgang des Koppelfeldes zwei verschiedene Verbindungswege zur Verfügung stehen

In Figur 2 ist ein Clos-Koppelfeld mit quadratischen Teilkoppelfeldern dargestellt. Es weist Redundanz auf; d.h. ein beliebiges Teilkoppelfeld darf ausfallen, ohne daß die Blockierungsfreiheit verloren geht. Das Koppelfeld gemäß Figur 2 weist jeweils m Teilkoppelfelder in der Eingangs-bzw. Ausgangsstufe ES, AS auf mit jeweils 2n Ein- bzw Ausgängen. In der Zwischenstufe ZS sind 2n Teilkoppelfelder mit m Ein- bzw. Ausgängen vorgesehen, d.h ein Teilkoppelfeld mehr als bei einer herkömmlichen Clos-Struktur. Gegenüber dem Koppelfeld Figur 1 besitzen die Teilkoppelfelder der Eingangs- bzw. Ausgangsstufe erfindungsgemäß die doppelte Anzahl von Ein- und Ausgängen. Damit kann jedes Teilkoppelfeld der Eingangs- bzw. Ausgangsstufe mit n Leitungen und n redundanten Leitungen belegt werden.

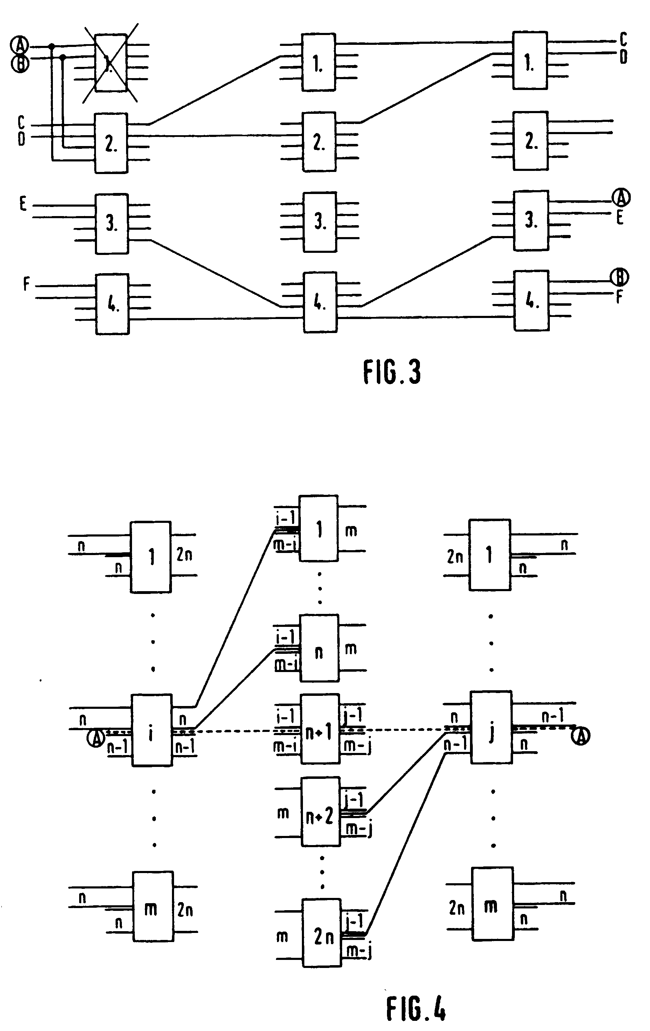

Damit die Blockierungsfreiheit auch bei einem Ausfall eines Teilkoppelfeldes der Eingangs- bzw. Ausgangsstufe erhalten bleibt, müssen die zu den n Anschlüssen jedes Teilkoppelfeldes redundanten n Leitungen erfindungsgemäß einzeln auf andere Teilkoppelfelder derselben Stufe verteilt werden. Daß n redundante Leitungen nicht alle auf ein Teilkoppelfeld geführt werden dürfen, zeigt Figur 3 für n=2 und m=4.

In Figur 3 sind die zum 1. Teilkoppelfeld der Eingangsstufe führenden Leitungen A und B beide auf die redundanten Eingänge nur eines anderen Teilkoppelfeldes nämlich des 2. Teilkoppelfeldes, geführt. Bei einem Ausfall des 1. Teilkoppelfeldes der Eingangsstufe können die Verbindungswege A und B nicht mehr aufgebaut werden, da beide über das 3. Teilkoppelfeld der Zwischenstufe durchgeschaltet werden müßten. Werden die n redundanten Ein-bzw. Ausgänge der Eingangs- bzw. Ausgangsstufe mit nichtredundanten Ein- bzw. Ausgängen von n anderen Teilkoppelfeldern der gleichen Stufe verbunden, d.h. die redundanten Pfade werden einzeln auf mehrere Teilkoppelfelder verteilt, so ist die Blockierungsfreiheit bei Ausfall eines Teilkoppelfeldes der Eingangs- bzw. Ausgangsstufe immer gewährleistet. Da in der Zwischenstufe ein Teilkoppelfeld mehr vorhanden ist als es für ein blockierungsfreies Clos-Koppelfeld nötig ist, ist ebenfalls Blockierungsfreiheit bei Ausfall eines Teilkoppelfeldes erfüllt.

Die Blockierungsfreiheit wird anhand der Figur 4 erläutert. Figur 4 zeigt für den "worst case" den Ausfall eines Teilkoppelfeldes in der Eingangsstufe. Durch die Aufteilung der redundanten Pfade wird über jedes Teilkoppelfeld in der Eingangs- und Ausgangsstufe höchstens eine redundante Leitung geführt. Bei einem Ausfall eines Teilkoppelfeldes in der Eingangsstufe sind vor dem Schalten einer Ersatzverbindung im schlimmsten Fall n + (n-1) Teilkoppelfelder der Zwischenstufe von den n Leitungen des i-ten Teilkoppelfeldes der Eingangsstufe und von den n-1 Leitungen des j-ten Teilkoppelfeldes der Ausgangsstufe belegt. Da die Zwischenstufe jedoch 2n Teilkoppelfelder besitzt, ist immer noch eine Teilkoppelfeld vorhanden über das die redundante Leitung zum gewünschten Ausgang durchschaltbar ist. In Figur 4 ist dies das (n +1)-te Teilkoppelfeld, über das die Ersatzverbindung A vom i-ten Teilkoppelfeld der Eingangsstufe zum j-ten Teilkoppelfeld der Ausgangsstufe geführt werden kann. Für den Ausfall eines Teilkoppelfeldes der Ausgangsstufe gilt aus Symmetriegründen dasselbe. Weiterhin zeigt ein Vergleich der Figuren 1 und 2, daß ein Ausfall eines Teilkoppelfeldes in der Zwischenstufe erfindungsgemäß durch das zusätzliche Teilkoppelfeld abgefangen wird. Es ist also mit den Maßnahmen der Erfindung möglich ein Clos-Koppelfeld mit Redundanz aufzubauen, bei dem ein beliebiges Teilkoppelfeld ausfallen kann ohne daß die Blockierungsfreiheit verloren geht.

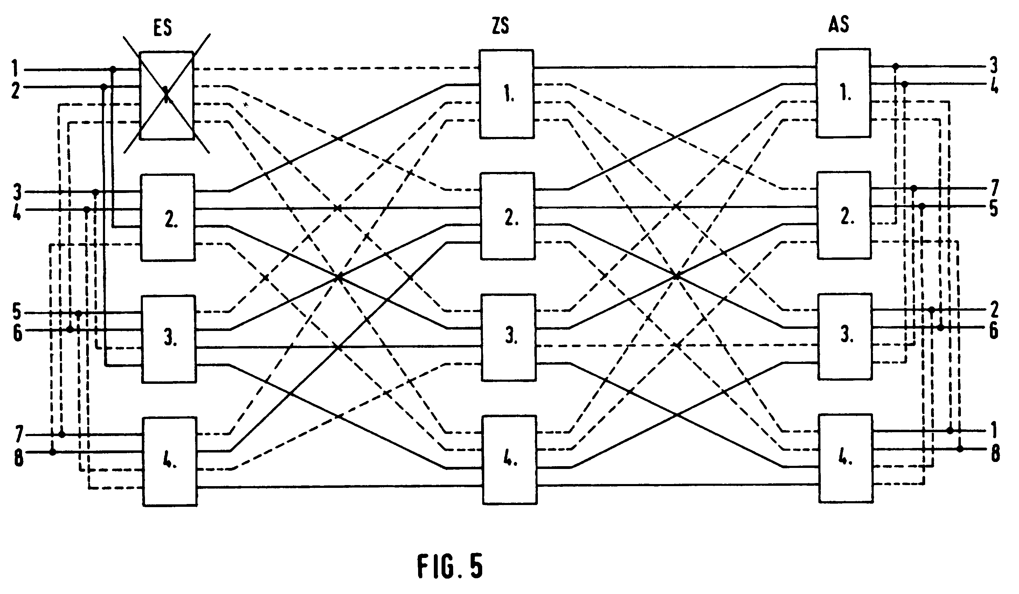

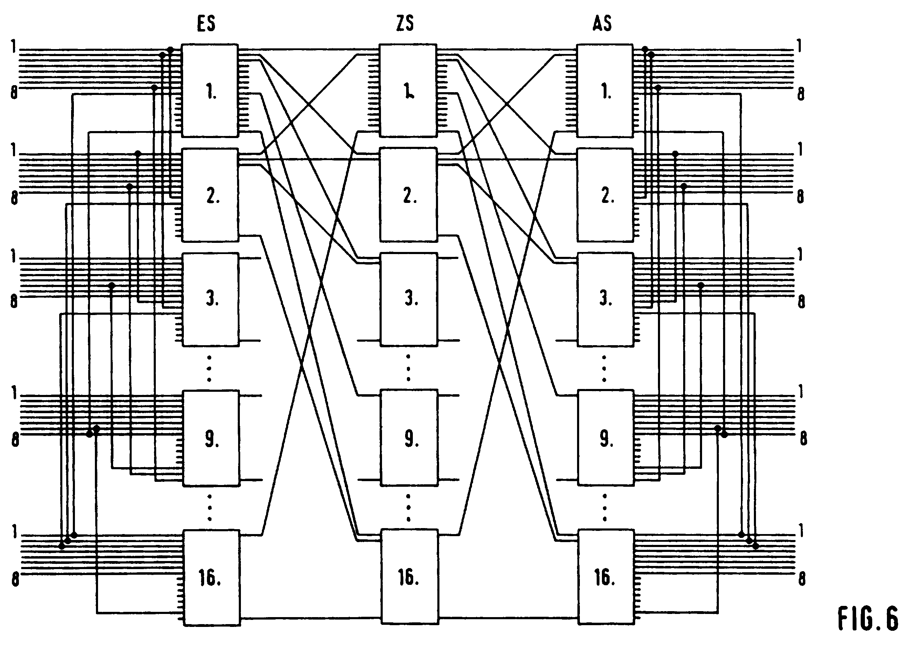

Die Figuren 5 und 6 zeigen Ausführungsbeispiele solcher Clos-Koppelfelder mit Redundanz und zwar Figur 5 für 8 Ein-bzw. Ausgänge und Figur 6 für 128 Ein- bzw. Ausgänge. In Figur 5 sind die Ersatzwege bei Ausfall des 1. Teilkoppelfeldes der Eingangsstufe dargestellt. Die benützten Pfade sind in Figur 5 nicht unterbrochen und die unbenützten Pfade gestrichelt eingezeichnet. Die redundanten Leitungen an den Eingängen der Eingangsstufe und an den Ausgängen der Ausgangsstufe sind jeweils zyklisch vernetzt. Zyklische Vernetzung bedeutet, daß bei Figur 5 die zu den Anschlüssen des 1. Teilkoppelfeldes redundanten Leitungen auf das 2. und 3. Teilkoppelfeld verteilt werden und die zu den Anschlüssen des 2. Teilkoppelfeldes redundanten Leitungen auf das 3. und 4. Teilkoppelfeld. Die zu den Anschlüssen des 3. Teilkoppelfeldes redundanten Leitungen sind auf das 4. und 1. Teilkoppelfeld verteilt. Entsprechendes gilt für die redundanten Leitungen in Figur 6.

Diese zyklische Vernetzung bringt eine übersichtliche Verdrahtung und damit weniger Schaltfehler. Darüber hinaus bringt sie weitere Vorteile, insbesondere wenn mehrere Teilkoppelfelder der Eingangs- oder Ausgangsstufe zu einer Gruppe zusammengefaßt sind und deren redundante Einund Ausgänge mit anderen Gruppen von Teilkoppelfeldern ebenfalls zyklisch vernetzt sind.

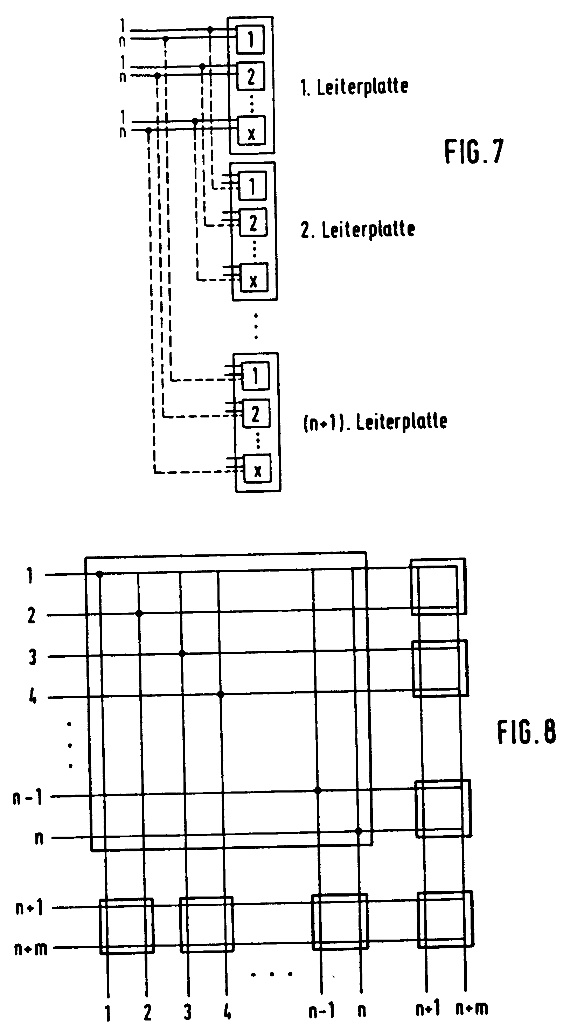

Beim Ausführungsbeispiel nach Figur 7 sind Gruppen von jeweils x Teilkoppelfeldern auf einer Leiterplatte untergebracht. Die zyklische Vernetzung ist hier so realisiert, daß die zu den Anschlüssen der 1. Leiterplatte redundanten Leitungen (gestrichelt) auf die 2. bis (n+1). Leiterplatte verteilt werden, die der 2. Leiterplatte auf die 3. bis (n+2). Leiterplatte usw. Die redundanten Leitungen der letzten Leiterplatten werden dann auf die 1. bis n. Leiterplatte zurückgeführt. Somit kann in der Eingangsstufe und in der Ausgangsstufe nicht nur ein Teilkoppelfeld sondern eine auf einer Leiterplatte sich befindende Gruppe von x Teilkoppelfeldern ausfallen, ohne daß die Blockierungsfreiheit verloren geht. Diese zyklische Vernetzung, die bei n Anschlüssen pro Teilkoppelfeld mindestens n + 1 Leiterplatten benötigt, ist auch für eine modulare Erweiterung des Koppelfeldes von Bedeutung. In der Zwischenstufe kann dagegen wegen der Redundanz höchstens ein Teilkoppelfeld auf einer Leiterplatte untergebracht werden, da hier gegenüber einem herkömmlichen Clos-Koppelfeld nur ein Teilkoppelfeld zuviel angeschlossen und damit ausgewechselt werden kann.

Für die Eingangs- und Ausgangsstufe können vorteilhaft gleichartige quadratische Module verwendet werden.

Das Koppelfeld nach der Erfindung wird beispielsweise mit Koppelbausteinen der Größe 16 x 16 aufgebaut. Diese können bereits ein Teilkoppelfeld bilden oder ein Teilkoppelfeld kann aus diesen Koppelbausteinen zusammengesetzt sein

Damit die Anzahl der Koppelpunkte und der Koppelbausteine klein ist und die Komplexität der Vernetzung überschaubar wird das Clos-Koppelfeld für 512 Anschlüsse mit 16 x 16 Modulen in der Eingangs- und Ausgangsstufe aufgebaut. Das Clos-Koppelfeld besitzt somit 64(16 x 16) Teilkoppelfelder in der Eingangs- und Ausgangsstufe und 16(64 x 64) Teilkoppelfelder in der Zwischenstufe.

Ein redundantes Clos-Koppelfeld n x n kann gemäß Fig. 8 mit einstufigen Koppelfeldern m x m modular erweitert werden. Die Redundanz bleibt jedoch nur dann erhalten, wenn bei den einstufigen Koppelfeldern redundante Eingänge vorgesehen sind.

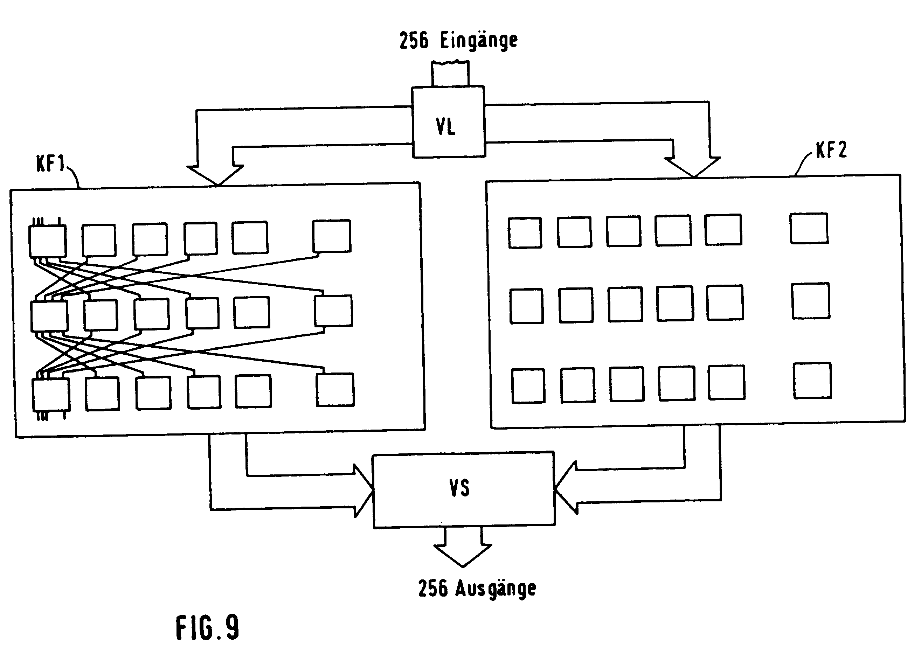

Eine Möglichkeit der Erweiterung besteht darin redundante Koppelfelder parallel zu schalten (Fig. 9). Das in Fig. 9 dargestellte Koppelfeld wird aus zwei parallel geschalteten mit quadratischen Modulen aufgebauten Koppelfeldern gewonnen. Die Eingänge werden bedarfsweise unter Zwischenschaltung einer Verknüpfungslogik VL auf beide Koppelfelder KF1 und KF2 gleichmäßig verteilt und die Ausgänge über eine Verknüpfungsschaltung VS zusammengefaßt.

Die Blockierungsfreiheit mit Redundanz bleibt unter der Voraussetzung erhalten, daß die Verknüpfungslogik VL bzw -schaltung VS nicht ausfällt

Zur Realisierung der Koppelpunktschaltkreise der verwendeten Teilkoppelfelder gibt es die vielfältigsten Möglichkeiten, beispielsweise die Ausbildung als Ermitter- oder Differenzverstärkerstufe mit nachgeschalteter Basisstufe (EP 148 395; US 4,630,046).

## Patentansprüche

1. Dreistufiges blockierungsfreies Clos-Koppelfeld mit einer aus mehreren Teilkoppelfeldern bestehenden Eingangsstufe, auf die die Koppelfeldeingänge verteilt sind, mit einer aus ebenfalls mehreren Teilkoppelfeldern bestehenden Ausgangsstufe und mit einer aus mehreren Teilkoppelfeldern bestehenden Zwischenstufe, dadurch gekennzeichnet, daß die Zahl der Ein- bzw. Ausgänge jedes der Teilkoppelfelder der Eingangs- bzw. Ausgangsstufe (ES, AS) in Bezug auf die Anzahl der Koppelfeldeingänge bzw. -ausgänge des jeweiligen Teilkoppelfeldes mindestens doppelt so groß gewählt ist, daß die Zwischenstufe (ZS) mindestens ein Teilkoppelfeld mehr aufweist als es für ein blockierungsfreies Koppelfeld erforderlich ist, daß die durch die Vervielfachung entstandenen n redundanten Ein- bzw. Ausgänge der Teilkoppelfelder mit nichtredundanten Koppelfeldeinbzw. -ausgängen mehrerer anderer Teilkoppelfelder der gleichen Stufe verbunden sind, und zwar so, daß die n redundanten Ein- bzw. Ausgänge eines Teilkoppelfeldes einzeln mit nichtredundanten Ein-bzw. Ausgängen von anderen Teilkoppelfeldern verbunden sind.

2. Koppelfeld nach Anspruch 1, dadurch gekennzeichnet, daß jeweils eine Gruppe von Teilkoppelfeldern einer Eingangs-oder Ausgangsstufe bezüglich ihrer redundanten Ein- bzw. Ausgänge mit den nichtredundanten Ein- bzw. Ausgängen einer folgenden Gruppe von Teilkoppelfeldern dieser Stufe in zyklischer Reihenfolge verbunden ist.

3. Koppelfeld nach Anspruch 2, dadurch gekennzeichnet, daß jede Gruppe von Teilkoppelfeldern der Eingangs- und Ausgangsstufe auf einer Leiterplatte untergebracht ist.

4. Koppelfeld nach Anspruch 1 oder 2, dadurch gekennzeichnet, daß alle Teilkoppelfelder bzw. Gruppen von Teilkoppelfeldern mit gleichartigen Modulen aufgebaut sind.

5. Koppelfeld nach einem der Ansprüche 1 bis 4, dadurch gekennzeichnet, daß Koppelfelder, deren Teilkoppelfelder nur nichtredunante Ein-bzw. Ausgänge aufweisen dadurch um redundante Eingänge erweitert sind, daß mindestens zwei solcher Koppelfelder parallel geschaltet sind.

6. Koppelfeld nach einem der Ansprüche 1 bis 5, dadurch gekennzeichnet daß die Teilkoppelfelder bzw. Module quadratisch, d.h. mit gleicher Anzahl von Ein- und Ausgängen aufgebaut sind.

## Claims

1. Three-stage non-blocking Clos switching array having an input stage which is composed of a plurality of sub-arrays and to which the switching array inputs are distributed, having an output stage likewise composed of a plurality of sub-arrays, and having an intermediate stage composed of a plurality of sub-arrays, characterized in that the number of inputs and outputs of in each case one of the sub-arrays of the input stage (ES) or output stage (AS) is selected to be at least twice as high as the number of switching array inputs and outputs of in each case one sub-array, in that the intermediate stage (ZS) has at least one sub-array more than is required for a non-blocking switching array, in that the n redundant inputs and outputs of the sub-arrays created by the multiplication are connected with non-redundant switching array inputs and outputs of a plurality of other sub-arrays of the same stage in such a manner that the n redundant inputs and outputs of one sub-array are individually connected with non-redundant inputs and outputs of other sub-arrays.

2. Switching array according to Claim 1, characterized in that in each case a group of sub-arrays of one input or output stage is connected in cyclic succession, with respect to its redundant inputs and outputs, with the non-redundant inputs and outputs of a subsequent group of sub-arrays of this stage.

3. Switching array according to Claim 2, characterized in that each group of sub-arrays of the input and output stage is accommodated on a circuit board.

4. Switching array according to Claim 1 or 2, characterized in that all sub-arrays and groups of sub-arrays are constructed with identical modules.

5. Switching array according to one of Claims 1 to 4, characterized in that switching arrays whose subarrays have only non-redundant inputs and outputs are expanded by redundant inputs in that at least two such switching arrays are connected in parallel.

6. Switching array according to one of Claims 1 to 5, characterized in that the sub-arrays and modules, respectively, are square, i.e. are constructed with the same number of inputs and outputs.

## Revendications

1. Réseau de couplage clos à trois étages, sans blocage, comportant un étage d'entrée qui est constitué de plusieurs réseaux de couplage partiels et sur lequel sont réparties les entrées du réseau de couplage, comportant aussi un étage de sortie également constitué de plusieurs réseaux de couplage partiels et comportant aussi un étage intermédiaire constitué de plusieurs réseaux de couplage partiels, caractérisé par le fait que l'on choisit le nombre des entrées ou des sorties de l'un des réseaux de couplage partiels de l'étage d'entrée ou de l'étage de sortie (ES, AS) au moins deux fois supérieur au nombre des entrées ou des sorties de réseau de couplage d'un réseau de couplage partiel, par le fait que l'étage intermédiaire (ZS) présente au moins un réseau de couplage partiel de plus que cela est nécessaire pour un réseau de couplage sans blocage, par le fait que les n entrées ou sorties redondantes, apparaissant du fait de la duplication, des réseaux de couplage partiels sont reliées avec des entrées ou sorties de réseau de couplage, non redondantes, de plusieurs autres réseaux de couplage partiels du même étage et, ce, de façon que les n entrées ou sorties, redondantes, d'un réseau de couplage partiel soient individuellement reliées avec des entrées ou des sorties, non redondantes, d'autres réseaux de couplage partiels.

2. Réseau de couplage selon la revendication 1, caractérisé par le fait qu'en ce qui concerne ses entrées ou sorties redondantes un groupe de réseaux de couplage partiels d'un étage d'entrée ou de sortie est respectivement relié, en séquence cyclique, avec les entrées ou les sorties, non redondantes, d'un groupe suivant de réseaux de couplage partiels de cet étage.

3. Réseau de couplage selon la revendication 2, caractérisé par le fait que chaque groupe de réseaux de couplage partiels de l'étage d'entrée et de l'étage de sortie est logé sur une plaquette de circuit imprimé.

4. Réseau de couplage selon la revendication 1 ou la revendication 2, caractérisé par le fait que tous les réseaux de couplage partiels ou tous les groupes de réseaux de couplage partiels sont construits avec des modules identiques.

5. Réseau de couplage selon l'une des revendications 1 à 4, caractérisé par le fait que l'on étend à des entrées redondantes des réseaux de couplage dont les réseaux de couplage partiels ne présentent que les entrées ou les sorties non redondantes, par le moyen que l'on monte en parallèle au moins deux de ces réseaux de couplage.

6. Réseau de couplage selon l'une des revendications 1 à 5, caractérisé par le fait que les réseaux de couplage partiels ou les modules sont de structure carrée, c'est-à-dire présentent le même nombre d'entrées et de sorties.
